# FASCICULE DE BREVET EUROPEEN

(11) **EP 3 738 196 B1**
(45) Date de publication et mention de la délivrance du brevet: **21.02.2024**
(21) Numéro de dépôt: 18833658.0
(22) Date de dépôt: 21.12.2018
(51) Int. Cl.: B60H 1/00, B60H 1/32, H02K 7/18, H02K 7/00, H02K 47/20, H02K 16/00

(54) **ENSEMBLE COMPORTANT UN GENERATEUR ET DES MOTEURS ELECTRIQUES POUR UN SYSTEME DE CLIMATISATION OU DE REFRIGERATION DE VEHICULE**
ANORDNUNG MIT EINEM GENERATOR UND ELEKTROMOTOREN FÜR EINE FAHRZEUGKLIMA- ODER KÄLTEANLAGE
ASSEMBLY COMPRISING A GENERATOR AND ELECTRIC MOTORS, FOR A VEHICLE AIR-CONDITIONING OR REFRIGERATION SYSTEM

(30) Priorité: 09.01.2018 FR 1850159
(43) Date de publication de la demande: 18.11.2020
(73) Titulaire: Moteurs Leroy-Somer, 16915 Angouleme (FR)
(72) Inventeur: NAY, Nicolas, 16560 Jauldes (FR); CHARENTON, Sébastien, 16440 Roullet-Saint-Estephe (FR); DUFAU, Stéphane, 16000 Angouleme (FR); ROBIN, Matthieu, 16600 Ruelle Sur Touvre (FR)
(74) Mandataire: Cabinet Nony
(86) Numéro de dépôt international: PCT/EP2018/086572
(87) Numéro de publication internationale: WO 2019/137803

(56) Documents cités:
- EP-A1- 3 170 688
- WO-A1-2009/147966
- WO-A2-2013/072892
- CN-U- 205 319 817
- FR-A1- 2 934 433
- US-A- 4 760 300
- US-A1- 2017 349 078

## Description

La présente invention concerne la production d'électricité à partir d'un ensemble comportant un moteur thermique et un dispositif de production d'électricité, pour l'alimentation d'un ou plusieurs moteurs électriques, notamment pour un système de réfrigération ou de climatisation d'un véhicule ou d'une remorque de véhicule.

Selon les régions du monde, il est parfois nécessaire de pouvoir alimenter l'ensemble du système de réfrigération ou de climatisation depuis un réseau électrique disponible, par exemple dans le cas où le véhicule est à l'arrêt.

Les demandes WO 2014/013457 et WO 2014/013457 portent sur des ensembles dans lesquels le générateur et le moteur électrique d'appoint d'entraînement du compresseur ne sont pas disposés sur un même arbre.

On connait par la demande de brevet EP 3 170 688 un ensemble dans lequel le générateur alimente directement le ou les moteurs électriques, la tension d'alimentation du ou des moteurs électriques étant la tension de sortie du générateur. A cet effet, les moteurs électriques sont nécessairement à courant alternatif, notamment à 50 Hz ou 60 Hz.

Or de tels moteurs peuvent être relativement coûteux.

Il existe donc un besoin pour simplifier et faciliter l'entraînement du système de réfrigération ou de climatisation, réduire le coût du dispositif de production d'électricité et augmenter l'efficacité du système pour réduire sa consommation de carburant.

Il existe également un besoin pour augmenter la compacité de l'ensemble et réduire son encombrement.

L'invention, telle que définie dans la revendication 1, vise notamment à répondre à tout ou partie de ces besoins, et a ainsi pour objet un ensemble comportant :
- un compresseur destiné à être entraîné par un moteur thermique, notamment un moteur thermique diesel,
- un moteur électrique d'appoint pour l'entraînement du compresseur lorsque ce dernier n'est pas ou ne peut pas être entraîné par le moteur thermique,
- un générateur à aimants permanents ayant un arbre qui peut être entraîné en rotation par le moteur thermique, le générateur et le moteur électrique d'appoint étant disposés sur cet arbre,
- un ou plusieurs moteurs électriques de condenseurs et/ou d'évaporateurs d'un système de climatisation ou de réfrigération de véhicule, lesdits moteurs électriques étant configurés pour être alimenté en courant continu, le générateur alimentant le ou les moteurs électriques à travers un convertisseur configuré pour fournir un courant continu, notamment un contrôleur basse tension.

Le générateur et le moteur électrique sont disposés sur un même arbre mécanique. On bénéficie ainsi d'un ensemble plus compact et plus efficace, sans la nécessité d'une transmission mécanique.

Le générateur et le moteur électrique d'appoint peuvent être contenus dans un carter commun. On peut ainsi monter le générateur et le moteur électrique d'appoint dans un véhicule existant, en lieu et place d'un moteur d'appoint préexistant. En variante, ils sont chacun montés dans un carter, l'ensemble pouvant alors comporter deux carters.

Le carter peut être un carter comportant des ouvertures, afin de favoriser sa ventilation. Il peut comporter un système de refroidissement intégré, par exemple un système de refroidissement par air. Il peut comporter deux ventilateurs disposés chacun de part et d'autre du générateur et du moteur, à chacune des extrémités de l'ensemble. L'air peut dans ce cas rentrer par les extrémités et sortir par le milieu, par des ouvertures ménagées dans le carter entre le générateur et le moteur électrique d'appoint. En variante encore, le carter peut être refroidi par un liquide, par exemple de l'eau. Le carter utilisé peut être un carter d'étanchéité IP 23, ou IP 21 ou en variante un carter d'étanchéité IP 55 ou IP 54 ou IP 56, voire IP 65.

L'invention permet d'améliorer le rendement de l'ensemble, ce qui peut être particulièrement avantageux pour des véhicules dont le moteur thermique doit avoir une puissance limitée. Cela peut être imposé par la législation, dans un objectif de limitation de la pollution. L'alimentation du ou des moteurs électriques par le générateur permet d'améliorer l'efficacité et le rendement de l'ensemble, par exemple par rapport à un système à liaison par poulie-courroie.

L'ensemble peut comporter ledit moteur thermique, notamment un moteur thermique diesel, pour l'entraînement du compresseur. Le moteur thermique et le ou les moteurs électriques peuvent appartenir à un système de réfrigération ou de climatisation d'un véhicule.

L'ensemble ainsi constitué permet les deux fonctionnements suivants pour un véhicule équipé dudit ensemble. Sur la route, le moteur thermique entraîne le compresseur directement ou via un accouplement, et entraîne le générateur, lequel fournit de l'électricité aux moteurs électriques des condenseurs et/ou évaporateurs. A l'arrêt, autrement appelé mode *stand-by,* c'est le moteur électrique d'appoint qui entraîne le compresseur réfrigérant alors que les moteurs de condenseurs et d'évaporateurs peuvent être alimentés par le générateur lui-même entraîné par le moteur électrique d'appoint.

Le moteur électrique d'appoint peut alimenter à la fois le compresseur et le générateur, lequel alimente le ou les moteurs électriques. Un avantage d'une telle configuration est que le câblage en est simplifié. Ce fonctionnement peut notamment avoir lieu lorsque le moteur thermique est à l'arrêt, notamment lorsqu'un véhicule comportant l'ensemble est à quai.

Le compresseur est de préférence à entraînement mécanique, notamment à pistons. Un compresseur mécanique à pistons peut être plus efficace qu'un compresseur rotatif, hermétique, à vis ou « scroll ». L'entraînement peut se faire par poulie-courroie. L'ensemble peut être dépourvu d'un compresseur entraîné par un moteur électrique, en mode de fonctionnement sur route à tout le moins.

La tension d'alimentation du ou des moteurs électriques de condenseurs et/ou d'évaporateurs peut être la tension de sortie du convertisseur, notamment une basse tension, par exemple une tension continue de 48V. L'utilisation de moteurs électriques à courant continu permet de diminuer leur coût, et donc le prix de revient de l'ensemble.

La tension d'entrée du convertisseur peut être une basse tension, par exemple une tension de 33V.

Le générateur peut être synchrone. Le générateur peut comporter un stator, lequel peut comporter un empilement de tôles. L'empilement de tôles peut comporter plusieurs paquets de tôles, décalés angulairement les uns par rapport aux autres. Le rotor du générateur peut comporter des aimants permanents. Le rotor du générateur peut comporter des aimants permanents, étant alors par exemple un rotor à concentration de flux ou à aimants enterrés dans une masse rotorique. Les aimants permanents peuvent être maintenues par des bagues d'extrémité disposées de chaque côté de la masse rotorique. Ces bagues peuvent être en aluminium. Le générateur peut comporter un rotor à huit pôles. Avantageusement, on diminue l'encombrement du moteur et donc de l'ensemble en augmentant le nombre de pôles. Un nombre de 4 pôles est aussi possible. Le stator du générateur peut être bobiné sur dents, comportant par exemple 12 dents, ou être réparti, comportant par exemple 48 encoches. Le diamètre extérieur du stator est par exemple de l'ordre de 200 mm.

Le générateur peut par exemple fonctionne à une fréquence choisie dans l'intervalle 37,5 à 60 Hz.

Il peut fournir une tension de sortie comprise dans l'intervalle 330 V AC à 660 V AC ou dans l'intervalle 12 V AC à 36 V AC.

Le moteur électrique d'appoint est un moteur asynchrone. Il s'agit, selon l'invention, d'une machine à induction, comportant un rotor à cage d'écureuil. Une telle configuration permet d'améliorer les performances électromagnétiques du moteur, tout en lui conférant un encombrement acceptable. Le rotor du moteur électrique d'appoint comporte un rotor bi-matière, ce qui permet d'améliorer la puissance et le rendement. Le rotor comporte un empilement de tôles magnétiques comportant des encoches. Les encoches reçoivent de l'aluminium injecté sous pression, formant ainsi des barreaux reliés entre eux à l'extrémité de l'empilement de tôles par des anneaux de court-circuit. L'aluminium peut être remplacé par du cuivre, notamment afin de diminuer la résistivité électrique des barreaux, afin d'améliorer le rendement et/ou le gain de puissance magnétique.

Le moteur électrique d'appoint peut être un moteur à 4 pôles.

La vitesse de rotation du moteur électrique d'appoint est par exemple de 1460 rpm,

Les stators du générateur et du moteur électrique d'appoint peuvent être identiques, notamment en taille et/ou en structure.

Le contrôleur est configuré pour transformer une tension d'entrée alternative en une tension de sortie continue. Le contrôleur peut être configuré pour transformer une tension d'entrée comprise entre 330 V AC et 660 V AC en une tension de sortie par exemple de 48 V DC. En variante, le contrôleur peut être configuré pour transformer une tension d'entrée comprise entre 12 V AC et 36 V AC en une tension de sortie par exemple de 48 V DC.

L'arbre peut être magnétique ou amagnétique. Il peut par exemple être réalisé par usinage d'un rondin d'acier.

Il peut comporter au moins quatre parties, l'une destinée à recevoir par exemple une poulie, une pour recevoir le générateur, une pour recevoir le moteur électrique d'appoint, et une pour recevoir par exemple un ventilateur, et par exemple un capteur de vitesse ou un aimant permanent.

L'arbre peut comporter une serration. Par « serration », on entend une déformation de la matière de l'arbre, notamment par pression, permettant de limiter les contraintes à la surface de l'arbre. Une telle serration de l'arbre permet de limiter les efforts d'insertion du rotor sur l'arbre. La serration peut comporter une gorge longitudinale, s'étendant sur tout ou partie de la longueur de l'arbre, par exemple sur toute sa longueur.

La serration peut être située sur la partie de l'arbre destinée à recevoir le générateur. En variante ou additionnellement, la serration peut être située sur la partie de l'arbre destinée à recevoir le moteur électrique d'appoint.

La serration peut être effectuée par frappe sur l'arbre au moyen d'un outil de serration, et plus particulièrement de deux outils de serration, l'un inférieur et l'autre supérieur. Un outil de serration peut comporter deux ciseaux définissant la longueur de la serration sur l'arbre. On peut utiliser deux outils, l'un inférieur positionné sur une table de presse et l'autre supérieur fixé sur le haut de la presse qui vient frapper l'arbre. On peut notamment utiliser une presse à volant. Pour effectuer la serration, un opérateur peut tout d'abord positionner l'arbre sur l'outil de serration inférieur, lequel peut être positionné sur la table de presse. Puis on donne un ordre de frappe à la presse, et l'outil supérieur vient frapper l'arbre. Grâce à l'impact des outils inférieur et supérieur, quatre déformations sont créées simultanément sur l'arbre. La matière est repoussée et forme le crantage recherché.

Le moteur électrique d'appoint peut également permettre d'alimenter un chargeur à courant continu, notamment pour alimenter une batterie par exemple, ainsi que des équipements intérieurs du véhicule, par exemple un contrôleur ou encore une interface homme-machine.

Le moteur électrique d'appoint peut également alimenter un système de chauffage d'appoint, par exemple un système de chauffage et/ou de dégivrage d'un compartiment d'un véhicule. Il fonctionne alors en générateur, comme source d'énergie non régulée ni contrôlée. Ce fonctionnement peut notamment avoir lieu lorsque le moteur thermique est en fonctionnement, notamment lorsqu'un véhicule comportant l'ensemble est sur route, c'est-à-dire que le moteur thermique est en fonctionnement et alimente le compresseur.

En variante, lorsque le véhicule est sur route et que le moteur thermique est en fonctionnement, le moteur électrique d'appoint peut être à l'arrêt.

Le moteur thermique peut être un moteur diesel. Le moteur thermique et le ou les moteurs électriques peuvent appartenir à un système de réfrigération ou de climatisation d'un véhicule. Le moteur thermique peut être différent du moteur servant à la propulsion du véhicule.

Le moteur thermique peut entraîner l'arbre du générateur par un système poulie-courroie. Un tel entraînement par poulie-courroie permet l'ajustement de la fréquence de sortie du générateur à la vitesse du moteur thermique afin de permettre l'utilisation de moteurs électriques de ventilateurs utilisables sur le réseau directement sans dégradation des performances.

L'ensemble peut comporter un dispositif de bascule de l'alimentation du moteur électrique d'appoint, permettant d'alimenter celui-ci à partir du réseau électrique. Le dispositif de bascule peut comporter un ou plusieurs interrupteurs à cet effet. Le dispositif de bascule peut être configuré pour que, lorsque le moteur thermique est à l'arrêt, les moteurs électriques de condenseur et/ou d'évaporateur sont alimentés par le générateur, et le compresseur est entraîné par le moteur électrique d'appoint. Dans ce cas, le générateur est entraîné par le moteur électrique d'appoint. Ainsi, le moteur électrique d'appoint alimente à la fois le compresseur et le générateur, lequel alimente le ou les moteurs électriques.

Le dispositif de bascule peut être configuré pour ne pouvoir s'enclencher qu'à l'arrêt du véhicule. Le ou chaque interrupteur peut comporter un ou plusieurs composants électroniques. Le ou chaque interrupteur peut être réalisé par tout moyen adapté et par exemple à l'aide d'un ou plusieurs interrupteurs électromécaniques ou à semi-conducteurs, par exemple à contacteur(s), relais, thyristor(s), triac(s), IGBT, MOSFET ou transistor(s) bipolaire(s).

Une telle configuration est plus économique en carburant. Lorsque le véhicule est à l'arrêt, le moteur diesel peut ne pas fonctionner.

Le réseau électrique externe peut être un réseau à 400V et 50Hz ou en variante un réseau électrique à 460V et 60Hz. Ainsi, l'ensemble peut fonctionner sur les réseaux électriques du monde entier, pouvant être adaptés quel que soit le lieu d'utilisation et les caractéristiques du réseau électrique local.

Le ou les moteurs électriques de condenseurs et/ou d'évaporateurs peuvent servir chacun à l'entraînement d'un ventilateur et être des moteurs de condenseur et/ou d'évaporateur.

L'absence de tout entraînement mécanique du ou des ventilateurs de condenseurs et/ou d'évaporateurs permet d'augmenter l'efficacité énergétique de l'ensemble.

L'ensemble peut comporter un unique condenseur, ou en variante plusieurs condenseurs. L'ensemble comporte par exemple deux condenseurs. L'ensemble peut comporter un unique évaporateur, ou en variante plusieurs évaporateurs. L'ensemble peut comporter par exemple deux évaporateurs, ou plus.

Selon l'invention, le ou les moteurs de condenseurs et/ou d'évaporateurs sont configurés pour être alimenté par un courant continu et sont des moteurs à vitesses variables, ce qui peut permettre de conserver des performances aérauliques proches quelle que soit la vitesse du moteur thermique. On peut ainsi limiter la puissance absorbée en cas d'augmentation de la vitesse du moteur thermique. Les vitesses de rotation du moteur thermique sont par exemple les suivantes : 1100 rpm, 1250 rpm, 1600 rpm, 2000 rpm et 2200 rpm.

L'un ou au moins l'un des moteurs de condenseurs et/ou d'évaporateurs peut comporter un rotor à quatre pôles, ce qui permet un fonctionnement à basse vitesse avec une faible puissance consommée. L'un ou au moins l'un des moteurs de condenseurs et/ou d'évaporateurs peut, en variante, comporter une autre polarité, tel que par exemple 2, 6 ou 8 pôles.

Le ou les moteurs de condenseurs et/ou d'évaporateurs peuvent comporter un ventilateur à chacune des extrémités libres de leur arbre.

L'ensemble peut encore comporter un compresseur entraîné mécaniquement par le moteur thermique. L'entraînement peut se faire par poulie-courroie.

L'ensemble peut être dépourvu de batteries.

L'invention, telle que définie dans la revendication 13, a encore pour objet un procédé de fonctionnement d'un ensemble tel que décrit ci-dessus, dans lequel :
- soit (i) le compresseur et le générateur sont entraînés par le moteur thermique, notamment lorsqu'un véhicule portant l'ensemble est sur route, le générateur pouvant alors fournir de l'électricité aux moteurs électriques des condenseurs et/ou évaporateurs, notamment à travers un convertisseur configuré pour fournir un courant continu, notamment un contrôleur basse tension,
- soit (ii) le compresseur est entraîné par le moteur électrique d'appoint, notamment lorsqu'un véhicule portant l'ensemble est à l'arrêt, les moteurs de condenseurs et d'évaporateurs pouvant alors être alimentés par le générateur, le générateur étant également entraîné par le moteur électrique d'appoint.

L'invention pourra être mieux comprise à la lecture de la description détaillée qui va suivre, d'un exemple de mise en oeuvre non limitatif de celle-ci, et à l'examen du dessin annexé, sur lequel :
- les figures 1a à 1c sont des vues en perspective d'un dispositif de production d'électricité d'un ensemble, embarqué ou non, réalisé conformément à l'invention,
- la figure 2 représente de manière schématique cet ensemble,
- la figure 3 est une vue schématique, en coupe longitudinale, du dispositif des figures 1a à 1c,
- les figures 4 et 5 sont des vues schématiques, en coupe transversale, respectivement du moteur électrique d'appoint et du générateur,
- la figure 6 est une vue de côté de l'arbre du générateur et du moteur électrique d'appoint,
- les figures 7a et 7b sont des vues de détail, en coupe transversale, de l'arbre de la figure 6, respectivement selon A-A et B-B,
- la figure 8a est une vue en perspective, schématique et partielle, de l'outil de serration qui peut être utilisé, et
- la figure 8b en est une vue en coupe transversale.

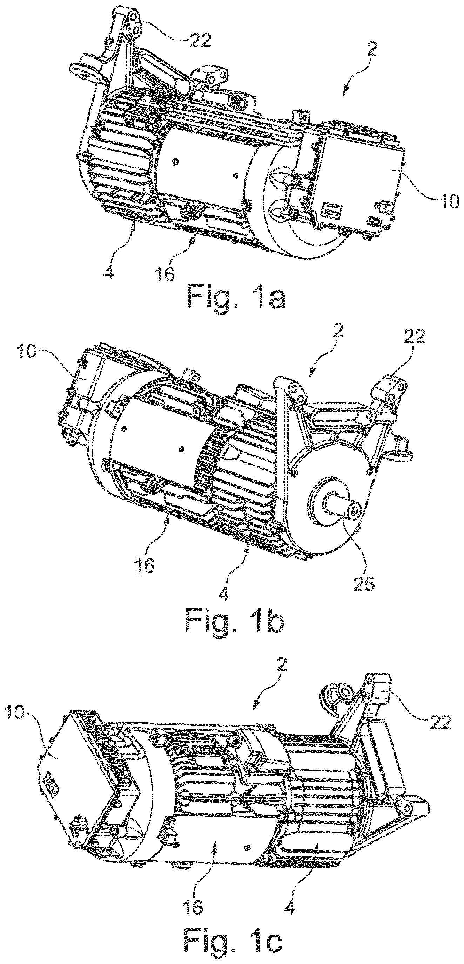

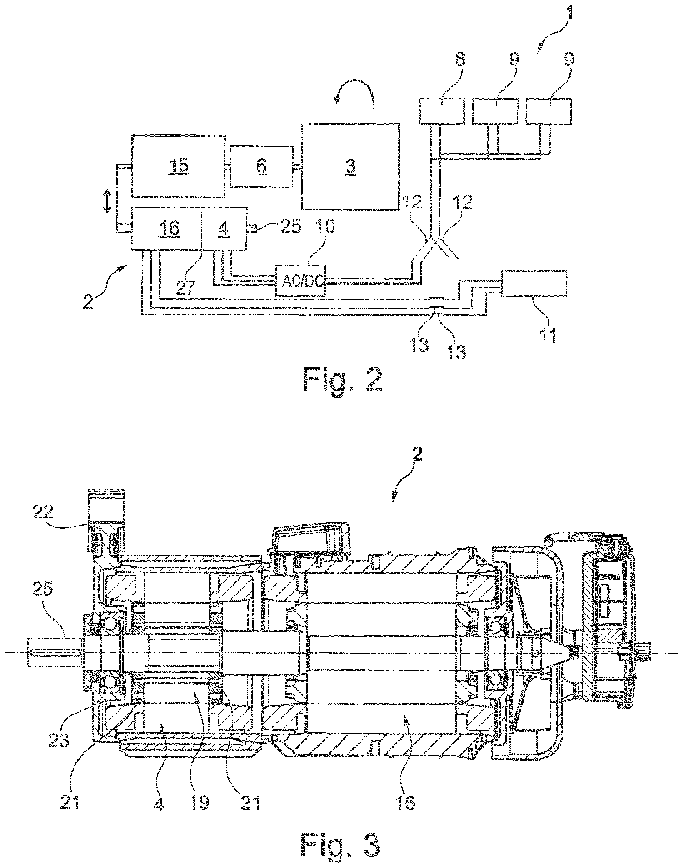

On a représenté aux figures 1a à 1c et 2 un ensemble 1 comportant d'une part un moteur thermique 3 et d'autre part un dispositif de production d'électricité 2 ayant un générateur 4 dont l'arbre 25 peut être entraîné en rotation par le moteur thermique 3.

L'ensemble 1 est par exemple embarqué sur un véhicule. Dans l'exemple décrit, le moteur thermique 3 est un moteur diesel.

L'ensemble comporte en outre des moteurs électriques 8, 9 d'un système de climatisation ou de réfrigération du véhicule ou de la remorque du véhicule, alimentés par le dispositif de production d'électricité 2. Dans l'exemple décrit, l'ensemble comporte un moteur 8 de condenseur et deux moteurs 9 d'évaporateur. Leur nombre pourrait bien entendu être différent sans que l'on sorte du cadre de la présente invention. Il pourrait notamment y avoir deux moteurs de condenseur et deux moteurs d'évaporateur.

Ces moteurs électriques 8, 9 sont configurés pour être alimenté par une tension continue, dans l'exemple décrit de 48 V continue.

Le dispositif de production d'électricité 2 est configuré pour que le générateur alimente les moteurs électriques à travers un convertisseur 10 configuré pour fournir un courant continu, notamment un contrôleur basse tension.

La tension d'alimentation des moteurs électriques est la tension de sortie du convertisseur 10. La tension d'entrée du convertisseur peut être une basse tension, par exemple une tension de 33V. La tension d'entrée du convertisseur est la tension de sortie du générateur 4.

L'ensemble comporte un compresseur 15 entraîné par le moteur thermique 3 par l'intermédiaire d'un accouplement 6. L'entraînement peut se faire par poulie-courroie. L'ensemble est ainsi dépourvu de compresseur entraîné électriquement.

L'ensemble comporte également un moteur électrique d'appoint 16 pour l'entraînement du compresseur 15 lorsque ce dernier n'est pas ou ne peut pas être entraîné par le moteur thermique. L'entraînement peut se faire par poulie-courroie.

Le moteur électrique d'appoint 16 est disposé sur le même arbre 25 que le générateur, de sorte que le moteur électrique d'appoint et le générateur peuvent être contenus dans un carter commun, ou non. Dans l'exemple de réalisation décrit, l'ensemble comporte deux carters, un pour le générateur et un pour le moteur électrique d'appoint. Le ou les carters peuvent être refroidis à l'air ou à l'eau.

Ce moteur électrique d'appoint 16 peut être alimenté à partir du réseau électrique 11. Malgré la présence du moteur électrique d'appoint 16, l'ensemble est dépourvu de compresseur entraîné électriquement en mode de fonctionnement sur route de l'ensemble.

Dans la variante de réalisation illustrée à la figure 1, le générateur 4 est entraîné par le moteur thermique 3 par l'intermédiaire d'une liaison mécanique passant par l'accouplement 6, le compresseur 15 et l'arbre 25.

Dans l'exemple décrit, l'ensemble comporte en outre un dispositif de bascule de l'alimentation du moteur électrique d'appoint, comportant des interrupteurs 13 permettant d'alimenter le moteur électrique d'appoint à partir du réseau électrique 11.

Lorsque le moteur thermique est à l'arrêt, les moteurs électriques de condenseur et/ou d'évaporateur sont alimentés par le générateur, et le compresseur est entraîné par le moteur électrique d'appoint. Dans ce cas, le générateur est entraîné par le moteur électrique d'appoint. Ainsi, le moteur électrique d'appoint alimente à la fois le compresseur et le générateur, lequel alimente le ou les moteurs électriques.

Comme on peut le voir sur la figure 3, le dispositif 2 comporte un seul bout d'arbre 25. En outre, le générateur comporte une bride 22 permettant le démontage d'un roulement 23 disposé à l'avant du générateur. Le dispositif 2 est dans l'exemple décrit de classe IP55.

Par ailleurs, le moteur thermique 3 entraîne l'arbre 25 du générateur 4 par poulie-courroie, ce qui permet l'ajustement de la fréquence de sortie du générateur à la vitesse du moteur thermique. Le moteur thermique 3 peut entraîner le générateur 4 à une vitesse variable. Par exemple, lorsque la charge du générateur est faible, la vitesse de rotation du moteur thermique 3 est relativement basse et lorsque la charge du générateur 3 augmente, la vitesse du moteur thermique 3 peut être augmentée.

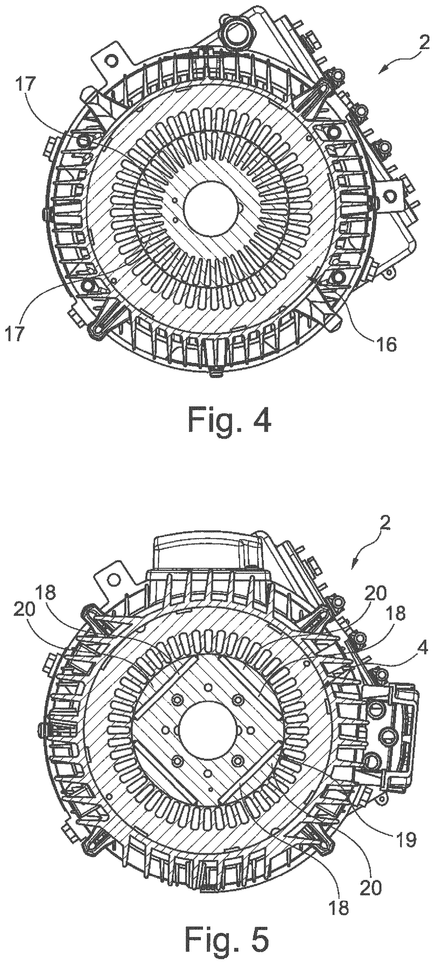

On a illustré aux figures 3 et 4 un exemple de réalisation dans lequel le moteur électrique d'appoint 16 comporte un rotor formé d'un empilement de tôles magnétiques comportant des encoches 17. Les encoches reçoivent de l'aluminium injecté sous pression, formant ainsi des barreaux reliés entre eux à l'extrémité de l'empilement de tôles par des anneaux de court-circuit. L'aluminium peut être remplacé par du cuivre, notamment afin de diminuer la résistivité électrique des barreaux, afin d'améliorer le rendement et/ou le gain de puissance magnétique.

On a illustré aux figures 3 et 5 un exemple de réalisation dans lequel le générateur 4 comporte un stator à bobinage réparti. Il comporte dans l'exemple décrit un rotor 19 à aimants permanents 18 enterrés sous la surface des pôles 20, comme illustré sur la figure 5. Les aimants peuvent être de type ferrite ou terres rares (par exemple NeFeB). Le rotor illustré comporte quatre pôles 20, mais pourrait en comporter 6 ou 8. Dans une autre variante non illustrée, les aimants pourraient être disposés en surface.

Les aimants permanents 18 sont maintenues par des bagues d'extrémité 21 disposées de chaque côté de la masse rotorique. Ces bagues peuvent être en aluminium.

Ce générateur a par exemple une puissance de 3,6 kW à une vitesse de fonctionnement de 1800 rpm

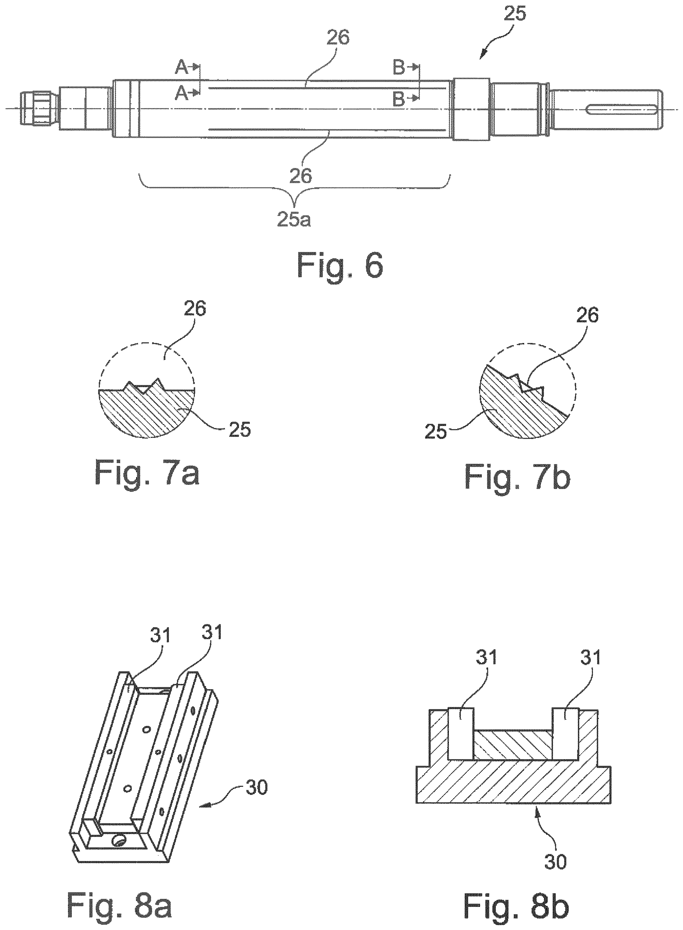

L'arbre 25 est représenté isolément à la figure 6. Il comporte dans l'exemple décrit une partie 25a portant des serrations 26, comme illustré aux figures 7a et 7b. Cette partie est destinée à recevoir le générateur et/ou le moteur électrique d'appoint.

La serration est effectuée par frappe sur l'arbre au moyen d'un outil de serration, et plus particulièrement de deux outils de serration, l'un inférieur et l'autre supérieur. Un outil de serration 30 comporte deux ciseaux 31 définissant la longueur de la serration sur l'arbre 25, comme illustré aux figures 8a et 8b.

## Revendications

1. Ensemble (1) comportant un générateur et des moteurs électriques, pour un système de climatisation ou de réfrigération de véhicule, comportant :
- un compresseur (15) destiné à être entraîné par un moteur thermique (3),
- un moteur électrique d'appoint (16) pour l'entraînement du compresseur (15) lorsque ce dernier n'est pas ou ne peut pas être entraîné par le moteur thermique, le moteur d'appoint comportant un rotor à cage d'écureuil comportant un empilement de tôles magnétiques comportant des encoches, les encoches recevant de l'aluminium ou du cuivre injecté sous pression,
- un générateur (4) à aimants permanents ayant un arbre (25) qui peut être entraîné en rotation par le moteur thermique (3), le générateur (4) et le moteur électrique d'appoint (16) étant disposés sur cet arbre (25),
- un ou plusieurs moteurs électriques de condenseurs et/ou d'évaporateurs (8, 9) d'un système de climatisation ou de réfrigération de véhicule, lesdits moteurs électriques (8, 9) étant configurés pour être alimenté par un courant continu, le générateur alimentant le ou les moteurs électriques (8, 9) à travers un convertisseur configuré pour fournir un courant continu, notamment un contrôleur basse tension,
les moteurs électriques de condenseurs et/ou d'évaporateurs étant des moteurs à vitesses variables.

2. Ensemble selon la revendication précédente, la tension d'alimentation du ou des moteurs électriques de condenseurs et/ou d'évaporateurs (8, 9) étant la tension de sortie du convertisseur, notamment une basse tension, par exemple une tension continue de 48V.

3. Ensemble selon l'une quelconque des revendications précédentes, la tension d'entrée du convertisseur étant une basse tension, par exemple une tension de 33V.

4. Ensemble selon l'une quelconque des revendications précédentes, dans lequel le générateur est synchrone.

5. Ensemble selon l'une quelconque des revendications précédentes, l'arbre (25) comportant une serration (26).

6. Ensemble selon l'une quelconque des revendications précédentes, le moteur thermique (3) et le ou les moteurs électriques (8, 9) appartenant à un système de réfrigération ou de climatisation d'un véhicule.

7. Ensemble selon l'une quelconque des revendications précédentes, dans lequel le générateur (4) et le moteur électrique d'appoint (16) sont contenus dans un carter commun (27).

8. Ensemble selon l'une quelconque des revendications précédentes, comportant un dispositif de bascule de l'alimentation du moteur électrique d'appoint (16), permettant d'alimenter celui-ci à partir du réseau électrique (11), le dispositif de bascule pouvant notamment comporter un ou plusieurs interrupteurs (13) à cet effet.

9. Ensemble selon la revendication précédente, le dispositif de bascule étant configuré pour que, lorsque le moteur thermique est à l'arrêt, les moteurs électriques de condenseur et/ou d'évaporateur (8, 9) sont alimentés par le générateur, et le compresseur est entraîné par le moteur électrique d'appoint (16).

10. Ensemble selon l'une quelconque des revendications précédentes, dans lequel le compresseur (15) est à entraînement mécanique, notamment à pistons.

11. Ensemble selon l'une quelconque des revendications précédentes, dans lequel le moteur électrique d'appoint (16) comporte un rotor à huit pôles.

12. Ensemble selon la revendication précédente, dans lequel le ou les moteurs électriques (8,9) servent chacun à l'entraînement d'un ventilateur.

13. Procédé de fonctionnement d'un ensemble selon l'une quelconque des revendications précédentes, dans lequel soit (i) le compresseur et le générateur sont entraînés par le moteur thermique, notamment lorsqu'un véhicule portant l'ensemble est sur route, le générateur pouvant alors fournir de l'électricité aux moteurs électriques des condenseurs et/ou évaporateurs, notamment à travers un convertisseur configuré pour fournir un courant continu, notamment un contrôleur basse tension, soit (ii) le compresseur est entraîné par le moteur électrique d'appoint, notamment lorsqu'un véhicule portant l'ensemble est à l'arrêt, les moteurs de condenseurs et d'évaporateurs pouvant alors être alimentés par le générateur, le générateur étant également entraîné par le moteur électrique d'appoint.

## Patentansprüche

1. Anordnung (1), die einen Generator und Elektromotoren umfasst, für eine Fahrzeugklima- oder - kälteanlage, umfassend:
- einen Kompressor (15), der dazu bestimmt ist, von einem Verbrennungsmotor (3) angetrieben zu werden,
- einen Zusatzelektromotor (16) zum Antreiben des Kompressors (15), wenn dieser nicht von dem Verbrennungsmotor angetrieben wird oder angetrieben werden kann, wobei der Zusatzmotor einen Käfigläufer umfasst, der einen Stapel von Magnetblechen umfasst, die Nuten umfassen, wobei die Nuten unter Druck eingepresstes Aluminium oder Kupfer aufnehmen,
- einen Permanentmagnetgenerator (4), der eine Welle (25) aufweist, die von dem Verbrennungsmotor (3) drehangetrieben werden kann, wobei der Generator (4) und der Zusatzelektromotor (16) auf dieser Welle (25) angeordnet sind,
- einen oder mehrere Kondensator- und/oder Verdampferelektromotoren (8, 9) einer Fahrzeugklima- oder -kälteanlage, wobei die Elektromotoren (8, 9) dazu konfiguriert sind, mit einem Gleichstrom versorgt zu werden, wobei der Generator den oder die Elektromotoren (8, 9) über einen Wandler, der dazu konfiguriert ist, einen Gleichstrom zu liefern, insbesondere eine Niederspannungssteuereinheit, versorgt,
wobei die Kondensator- und/oder Verdampferelektromotoren Motoren mit variabler Drehzahl sind.

2. Anordnung nach dem vorhergehenden Anspruch, wobei die Versorgungsspannung des oder der Kondensator- und/oder Verdampferelektromotoren (8, 9) die Ausgangsspannung des Wandlers, insbesondere eine Niederspannung, beispielsweise eine Gleichspannung von 48 V, ist.

3. Anordnung nach einem beliebigen der vorhergehenden Ansprüche, wobei die Eingangsspannung des Wandlers eine Niederspannung, beispielsweise eine Spannung von 33 V, ist.

4. Anordnung nach einem beliebigen der vorhergehenden Ansprüche, wobei der Generator synchron ist.

5. Anordnung nach einem beliebigen der vorhergehenden Ansprüche, wobei die Welle (25) eine Einkerbung (26) umfasst.

6. Anordnung nach einem beliebigen der vorhergehenden Ansprüche, wobei der Verbrennungsmotor (3) und der oder die Elektromotoren (8, 9) zu einer Kälte- oder Klimaanlage eines Fahrzeugs gehören.

7. Anordnung nach einem beliebigen der vorhergehenden Ansprüche, wobei der Generator (4) und der Zusatzelektromotor (16) in einem gemeinsamen Gehäuse (27) untergebracht sind.

8. Anordnung nach einem beliebigen der vorhergehenden Ansprüche, die eine Vorrichtung zum Umschalten der Versorgung des Zusatzelektromotors (16) umfasst, die die Versorgung desselben über das Stromnetz (11) gestattet, wobei die Umschaltvorrichtung zu diesem Zweck insbesondere einen oder mehrere Schalter (13) umfassen kann.

9. Anordnung nach dem vorhergehenden Anspruch, wobei die Umschaltvorrichtung so konfiguriert ist, dass, wenn der Verbrennungsmotor stillsteht, die Kondensator- und/oder Verdampferelektromotoren (8, 9) von dem Generator versorgt werden und der Kompressor von dem Zusatzelektromotor (16) angetrieben wird.

10. Anordnung nach einem beliebigen der vorhergehenden Ansprüche, wobei der Kompressor (15) einen mechanischen Antrieb, insbesondere einen Kolbenantrieb, besitzt.

11. Anordnung nach einem beliebigen der vorhergehenden Ansprüche, wobei der Zusatzelektromotor (16) einen achtpoligen Rotor umfasst.

12. Anordnung nach dem vorhergehenden Anspruch, wobei der oder die Elektromotoren (8, 9) jeweils zum Antreiben eines Ventilators dienen.

13. Verfahren für den Betrieb einer Anordnung nach einem beliebigen der vorhergehenden Ansprüche, wobei entweder (i) der Kompressor und der Generator von dem Verbrennungsmotor angetrieben werden, insbesondere wenn ein Fahrzeug, das die Anordnung trägt, auf der Straße unterwegs ist, wobei der Generator in diesem Fall den Elektromotoren der Kondensatoren und/oder Verdampfer Elektrizität liefern kann, insbesondere über einen Wandler, der dazu konfiguriert ist, einen Gleichstrom zu liefern, insbesondere eine Niederspannungssteuereinheit, oder (ii) der Kompressor von dem Zusatzelektromotor angetrieben wird, insbesondere wenn ein Fahrzeug, das die Anordnung trägt, stillsteht, wobei die Kondensator- und Verdampfermotoren in diesem Fall von dem Generator versorgt werden können, wobei der Generator ebenfalls von dem Zusatzelektromotor angetrieben wird.

## Claims

1. Assembly (1), comprising a generator and electric motors, for a vehicle air-conditioning or cooling system, comprising:
- a compressor (15) intended to be driven by a heat engine (3),
- a top-up electric motor (16) for driving the compressor (15) when the latter is not or cannot be driven by the heat engine, the top-up motor comprising a squirrel cage rotor comprising a stack of magnetic plates comprising notches, the notches receiving aluminium or copper injected under pressure,
- a generator (4) with permanent magnets having a shaft (25) which can be driven in rotation by the heat engine (3), the generator (4) and the top-up electric motor (16) being disposed on this shaft (25),
- one or more electric motors of condensers and/or of evaporators (8, 9) of a vehicle air-conditioning or cooling system, said electric motors (8, 9) being configured to be powered by a direct current, the generator powering the electric motor or motors (8, 9) through a converter configured to supply a direct current, notably a low-voltage controller,
the condenser and/or evaporator electric motors being variable-speed motors.

2. Assembly according to the preceding claim, the power supply voltage of the electric motor or motors of condensers and/or of evaporators (8, 9) being the output voltage of the converter, notably a low voltage, for example a direct voltage of 48 V.

3. Assembly according to either one of the preceding claims, the input voltage of the converter being a low voltage, for example a voltage of 33 V.

4. Assembly according to any one of the preceding claims, wherein the generator is synchronous.

5. Assembly according to any one of the preceding claims, the shaft (25) comprising a serration (26).

6. Assembly according to any one of the preceding claims, the heat engine (3) and the electric motor or motors (8, 9) belonging to a vehicle cooling or air-conditioning system.

7. Assembly according to any one of the preceding claims, wherein the generator (4) and the top-up electric motor (16) are contained in a common housing (27).

8. Assembly according to any one of the preceding claims, comprising a rocker switch device for powering the top-up electric motor (16), making it possible to supply the latter from the electrical network (11), the rocker switch device being able to notably comprise one or more switches (13) for that purpose.

9. Assembly according to the preceding claim, the rocker switch device being configured so that, when the heat engine is stopped, the condenser and/or evaporator electric motors (8, 9) are powered by the generator, and the compressor is driven by the top-up electric motor (16) .

10. Assembly according to any one of the preceding claims, wherein the compressor (15) has a mechanical drive, notably with pistons.

11. Assembly according to any one of the preceding claims, wherein the top-up electric motor (16) comprises an eight-pole rotor.

12. Assembly according to the preceding claim, wherein the electric motor or motors (8, 9) are each used to drive a fan.

13. Method for operating an assembly according to any one of the preceding claims, wherein either (i) the compressor and the generator are driven by the heat engine, notably when a vehicle bearing the assembly is on the road, the generator then being able to supply electricity to the electric motors of the condensers and/or evaporators, notably through a converter configured to supply a direct current, notably a low-voltage controller, or (ii) the compressor is driven by the top-up electric motor, notably when a vehicle bearing the assembly is stopped, the condenser and evaporator motors then being able to be powered by the generator, the generator being also driven by the top-up electric motor.
